# EUROPÄISCHE PATENTANMELDUNG

(11) **EP 0 994 262 A2**
(43) Veröffentlichungstag der Anmeldung: **19.04.2000**
(21) Anmeldenummer: 99118149.6
(22) Anmeldetag: 11.09.1999
(51) Int. Cl.: F16B 9/00, F16B 5/10, B60T 11/26

(54) **Befestigungsvorrichtung**

(30) Priorität: 14.10.1998 DE 19847323
(71) Anmelder: Continental Teves AG & Co. oHG, 60488 Frankfurt (DE)
(72) Erfinder: Hennemann, Karl-Heinz, 61352 Bad Homburg (DE); Tandler, Peter, 61479 Kronberg/Ts. (DE); König, Harald, 61239 Ober-Mörlen (DE)

(57) **Zusammenfassung**

Es handelt sich um eine Befestigungsvorrichtung, insbesondere zum Festlegen eines Behälters (1) an einem Hauptzylinder (2) einer Kraftfahrzeug-Bremsanlage. Diese Befestigungsvorrichtung weist in ihrem grundsätzlichen Aufbau eine Aufnahmebohrung (3) am Hauptzylinder (2) für einen hierin einsetzbaren Befestigungsstift (4) auf. Dieser Befestigungsstift (4) verankert den Behälter (1) am Hauptzylinder (2). Zu diesem Zweck ist am Behälter (1) zumindest ein von dem Befestigungsstift (4) im Zuge seiner Verankerung überfahrbarer Sicherungsnoppen (10) zur Verhinderung einer unerwünschten Lösebewegung vorgesehen.

## Beschreibung

Die Erfindung betrifft eine Befestigungsvorrichtung, insbesondere zum Festlegen eines (Bremsflüssigkeits-) Behälters an einem (Tandem-) Hauptzylinder einer Kraftfahrzeug-Bremsanlage, mit einer Aufnahmebohrung an Hauptzylinder für einen hierin einführbaren bzw. einsetzbaren Befestigungsstift, welcher den Behälter bzw. das Gehäuse an dem Hauptzylinder verankert.

Eine Befestigungsvorrichtung der eingangs beschriebenen Ausgestaltung ist beispielsweise durch die deutsche Offenlegungsschrift 43 15 063 bekannt geworden. Dabei sollte betont werden, daß die vorliegende Erfindung selbstverständlich nicht auf das angegebene Sachgebiet beschränkt ist. Denn bei dem beispielsweise genannten Behälter kann es sich generell um ein beliebiges Bauteil handeln, welches an einem zugehörigen anderen Bauelement (vorliegend einem Hauptzylinder) befestigt wird.

Nach dem Stand der Technik wird der Befestigungsstift beispielsweise mit dem Gehäuse verrastet. Auch kennt man an dieser Stelle Schraubbefestigungen. - Beide Vorgehensweisen können nicht in allen Punkten befriedigen, insbesondere wenn es darum geht, die Montagegeschwindigkeit zu erhöhen und das Gewicht zu senken. Andererseits soll die Befestigung für Austauschzwecke auch lösbar sein. Hier setzt die Erfindung ein.
Der Erfindung liegt das technische Problem zugrunde, eine Befestigungsvorrichtung der eingangs beschriebenen Ausführungsform so weiterzubilden, daß bei einfacher und schneller Montage Gewichts- und Kostenvorteile erreicht werden.

Zur Lösung dieser Aufgabe schlägt die Erfindung, ausgehend von einer Befestigungsvorrichtung der eingangs beschriebenen Ausgestaltung vor, daß außenseitig am Behälter zumindest ein vom Befestigungsstift im Zuge seiner Verankerung überfahrbarer Sicherungsnoppen zur Verhinderung einer unerwünschten Lösebewegung vorgesehen ist. Regelmäßig ist der Befestigungsstift als Bajonettstift ausgebildet und weist einen Ankerstumpf mit frontseitigem Dreiecksanker auf, wobei der Dreiecksanker den Sicherungsnoppen im Zuge einer Verankerungsschwenkbewegung elastisch zurückfedernd überfährt. Ankserstumpf und Dreiecksanker können einstückig und aus Kunststoff ausgebildet sein. Hierbei haben sich insbesondere Thermoplaste als Werkstoff bewährt. Es kann aber auch auf Duroplaste zurückgegriffen werden.

Jedenfalls wird hierdurch bereits eine einfache und schnelle Montage des Befestigungsstiftes gewährleistet, weil dieser im Zuge seiner Verankerung lediglich den zumindest einen Sicherungsnoppen überfahren muß. Dieser Sicherungsnoppen dient dazu, daß eine unerwünschte Lösebewegung des Befestigungsstiftes vermieden wird. Aufwendige Schraubarbeiten fallen nicht (mehr) an. Dementsprechend ist auch die Fertigung des Behälters vereinfacht, da ein Gegengewinde entfallen kann. Auch die Herstellung des Befestigungsstiftes läßt sich einfach und kostengünstig durchführen, weil es sich hierbei um ein simples Kunststoffspritzgußteil handelt. Die erforderliche Elastizität für das Zurückfedern kann einfach in die entsprechenden Bauteile (Befestigungsstift 4, Arm 6 und / oder Sicherungsnoppen 10) integriert werden, vorzugsweise durch entsprechende konstruktive Auslegung mit Dehnbereichen oder einfach durch die Wahl des Kunststoffwerkstoffes mit einem bestimmten Elastizitätsmodul. Selbstverständlich lassen sich hier auch. Mehrkomponentenkunststoffe mit definierten Elastizitäts- (und Temperatur-) Eigenschaften einsetzen. Im übrigen kann die Montage automatisiert werden, weil die Verankerungsschwenkbewegung unschwer maschinell ausgeführt werden kann, ohne daß auf bestimmte Drehmomente, enge Toleranzen bei der Schwenkbewegung und dergleichen geachtet werden muß. Schließlich kann auch eine Gewindeprüfung entfallen, weil eine Schraubverbindung bewußt nicht mehr verfolgt wird. Im Ergebnis lassen sich folglich deutliche Kosten- und Gewichtsvorteile realisieren.

Weitere vorteilhafte Ausgestaltungen werden im folgenden beschrieben. So ist der Ankerstumpf im allgemeinen kreiszylindrisch im Vergleich zu einer Rotationssymmetrieachse ausgebildet. Demgegenüber ist der Dreiecksanker üblicherweise im Querschnitt rechteckförmig ausgeführt. Im übrigen kann er eine kreisbogenförmig abgerundete Spitze aufweisen. Durch den rechteckförmigen Querschnitt ist der Dreiecksanker insgesamt (spiegel-) symmetrisch zu zwei Symmetrieachsen ausgeführt. Der Schnittpunkt dieser beiden Symmetrieachsen des Dreiecksankers stimmt mit der vorerwähnten Rotationssymmetrieachse des Ankerstumpfes überein. Folglich ist auch der Dreiecksanker rotationssymmetrisch im Vergleich zu dieser Rotationssymmetrieachse ausgeführt, und zwar bezüglich Drehungen um jeweils 90°.

Der Ankerstumpf kann dreiteilig ausgebildet sein. Im einzelnen besteht er aus einer Drehführung mit rückseitigem Betätigungskopf, beispielsweise Schraubenkopf mit Schlitzaufnahme, einem Anschlagkonus und schließlich einem Konusfortsatz. An diesen Konusfortsatz ist der Dreiecksanker angeschlossen. Der Konusfortsatz weist - wie der gesamte Ankerstumpf - einen kreiszylindrischen Querschnitt auf, wobei im Bereich des Konusfortsatzes ein Durchmesser verwirklicht ist, welcher der Länge der Schmalseite des im Querschnitt rechteckförmigen Dreieckankers entspricht. Auch die Drehführung besitzt einen kreiszylindrischen Querschnitt, diesmal mit einem Durchmesser, welcher größer oder gleich im Vergleich zur Länge der Breitseite des im Querschnitt rechteckförmigen Dreiecksanker ausgebildet ist.

Um auf zusätzliche Sicherungsmaßnahmen für den Dreiecksanker verzichten zu können, weist der Behälter außenseitig vier, in gleichmäßiger Verteilung um eine Bohrungsöffnung verteilte, Sicherungsnoppen auf. Das Einsetzen des Befestigungsstiftes in den Behälter wird für den Fall erleichtert, daß die axiale Lage des Befestigungsstiftes fixiert wird. Zu diesem Zweck besitzt der Behälter eine an den Anschlagkonus des Ankerstumpfes und gegebenenfalls die Drehführung angepaßte kreisförmige Steckbohrung für den Befestigungsstift. Mit anderen Worten kann der Bajonett- bzw. Befestigungsstift in die Steckbohrung so weit eingesteckt werden, bis sein Anschlagkonus an einem zugehörigen Gegenkonus der Steckbohrung zur Anlage kommt. Hierdurch ist der Befestigungsstift axial ausgerichtet. In dieser Position des Befestigungsstiftes sind folglich nur noch Dreh- bzw. Schwenkbewegungen möglich. In behälteraußenseitiger Richtung schließt sich an die Steckbohrung vorzugsweise eine Ankerbohrung mit an den Dreiecksanker angepaßtem rechteckförmigen Querschnitt an. Durch diese Ankerbohrung wird der Dreiecksanker im Zuge des Einsetzens des Befestigungsstiftes in die Aufnahmebohrung am Hauptzylinder und die Steckbohrung am Gehäuse hindurchgesteckt. Sobald der Befestigungsstift verankert ist, befindet sich im Bereich der Ankerbohrung der Konusfortsatz. Da dieser Konusfortsatz vom Durchmesser her an die Länge der Schmalseite des im Querschnitt rechteckförmigen Dreiecksankers angepaßt ist, läßt er sich problemlos auch in der entsprechend ausgeführten Ankerbohrung hin - und herschwenken.

Die Sicherungsnoppen sind nach bevorzugter Ausführungsform der Erfindung eckseitig der Ankerbohrung angeordnet, wobei die Verankerungsschwenkbewegung als 90° Drehbewegung ausgebildet ist. Diese 90° Drehbewegung erfolgt um die Rotationssymmetrieachse, die - wie gesagt - gleichzeitig Schnittpunkt der beiden Symmetrieachsen des im Querschnitt rechteckförmigen Dreiecksankers ist. In Verankerungsstellung ist der Dreiecksanker im allgemeinen senkrecht zur Ankerbohrung unter Bildung einer Kreuzanordnung von Dreiecksanker und Ankerbohrung ausgerichtet. In dieser Kreuzanordnung sind die Sicherungsnoppen üblicherweise symmetrisch verteilt im Vergleich zu den zugehörigen Kreuzschenkeln angeordnet. Dabei befindet sich jeweils ein Sicherungsnoppen in einem (der vier) Kreuzbereiche.

Im folgenden wird die Erfindung anhand einer lediglich ein Ausführungsbeispiel darstellenden Zeichnung näher erläutert; es zeigen:
- Figur 1: einen Ausschnitt aus einem Hauptzylinder mit Behälter,
- Figur 2: eine Ansicht auf den Gegenstand nach Figur 1 aus der Richtung X,
- Figur 3: einen Schnitt durch den Gegenstand nach Figur 1 entlang der Linie A-A,
- Figur 4: den Befestigungsstift im Detail,
- Figur 5: einen Schnitt durch Figur 4 entlang der Linie B-B und
- Figur 6: eine Frontansicht aus Richtung Y auf den Gegenstand nach Figur 4.

In den Figuren ist eine Befestigungsvorrichtung gezeigt, welche sich grundsätzlich zum Festlegen eines Bauteiles an einem anderen Bauelement eignet. Vorliegend dient die Befestigungsvorrichtung zum Festlegen eines (Bremsflüssigkeit-) Behälters 1 an einem (Tandem-) Hauptzylinder 2 einer Kraftfahrzeug -Bremsanlage. Zu diesem Zweck weist der Hauptzylinder 2 eine Aufnahmebohrung 3 für einen hierin einsetzbaren Befestigungsstift 4 auf. Die vorgenannte Aufnahmebohrung 3 erstreckt sich senkrecht zu einem nicht näher spezifizierten stegartigen Fortsatz 5 des Hauptzylinders 2. Der Behälter 1 weist den Fortsatz 5 übergreifende beidseitig des Fortsatzes 5 angeordnete, und vorzugsweise in Axialrichtung des Befestigungsstiftes 4 federnd zueinander verspannbare Arme 6 auf. Der Befestigungsstift 4 durchdringt die Arme 6 im Bereich einer Frontbohrung 7 sowie einer Steckbohrung 8 mit zugehöriger Ankerbohrung 9. Nach Durchdringung der vorgenannten Bohrungen 7, 3, 8 und 9 läßt sich der Befestigungsstift 4 festlegen, so daß der Behälter 1 am Zylinder 2 verankert wird. Es ist grundsätzlich denkbar, die oben geschilderte Anordnung quasi umzukehren, das heißt die Arme 6 eine Hauptzylinder (beispielsweise aus Kunststoff) zuzuordnen und den Behälter 1 mit der Aufnahmebohrung 3 zu versehen, ohne den Grundgedanken der Erfindung mit elastisch federnden Armen 6 und einem die Verspannung erzeugenden Befestigungsstift 4 zu verlassen.

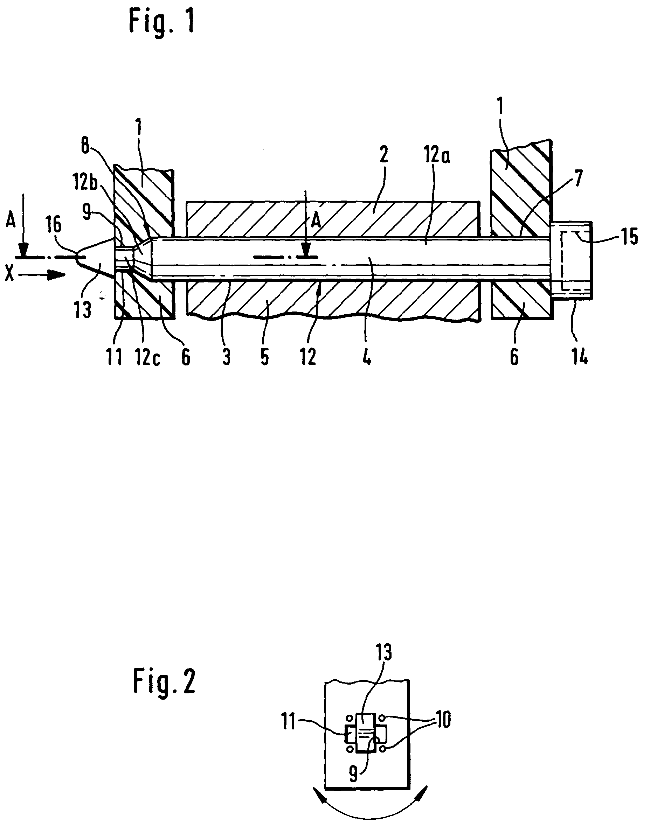

Am Behälter 1 ist zumindest ein vom Befestigungsstift 4 im Zuge seiner Verankerung überfahrbarer Sicherungsnoppen 10 vorgesehen. Der Sicherungsnoppen kann grundsätzlich beliebige Form aufweisen. Ein wesentliches Kennzeichen ist jedoch, daß er einen gewissen Überstand über eine ebene Fläche aufweist, so daß jeder Arm beim Verriegeln im Zuge der Drehbewegung zumindest kurzzeitig elastisch federnd ausgelenkt wird. Die Sicherungsnoppen 10 verhindert eine unerwünschte Lösebewegung des Befestigungsstiftes 4 in die Lösestellung, weil dazu die Federwirkung der Arme 6 überwunden werden muß. Nach dem Ausführungsbeispiel sind vier außenseitig des Behälters 1 in gleichmäßiger Verteilung um eine Bohrungsöffnung 11 angeordnete Sicherungsnoppen 10 vorgesehen (vergleiche Figur 2). Insbesondere auch eine federnde Anordnung der Arme 6 verhindert ein Zurückdrehen des Befestigungsstiftes 4 und das "Überfahren" der Sicherungsnoppen 10.

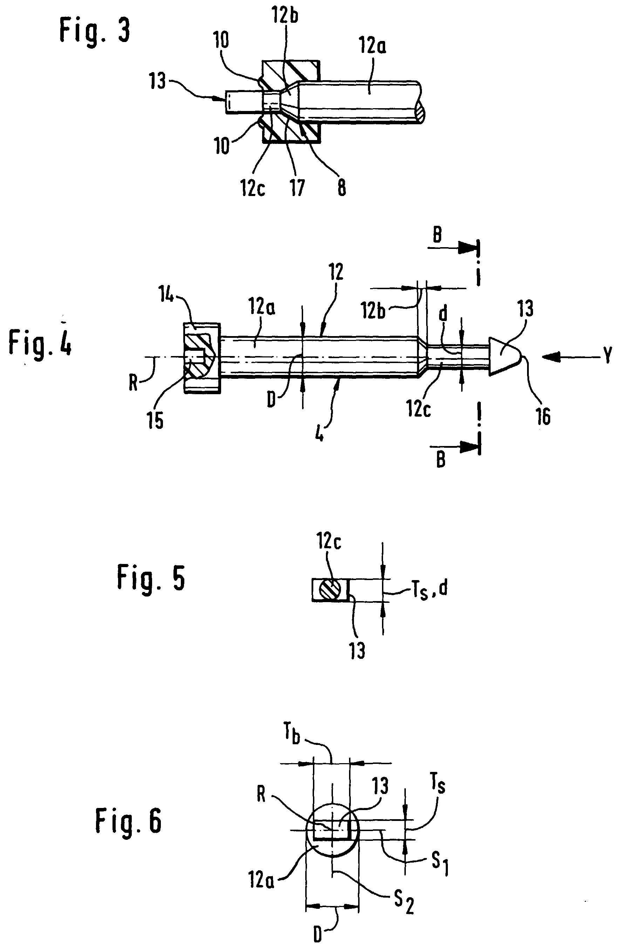

Anhand der Figuren 4 bis 6 erkennt man, daß der Befestigungsstift 4 als Bajonettstift 4 mit Ankerstumpf 12 und frontseitigem Dreiecksanker 13 ausgebildet ist. Der Dreiecksanker 13 überfährt die Sicherungsnoppen 10 im Zuge seiner Verankerungsschwenkbewegung, und zwar elastisch zurückfedernd. Diese Verankerungsschwenkbewegung ist in Figur 2 durch einen Doppelpfeil angedeutet. Ankerstumpf 12 und Dreiecksanker 13 sind vorliegend einstückig aus einem Thermoplast oder Duroplast gefertigt. Der Ankerstumpf 12 ist insgesamt kreiszylindrisch im Vergleich zu einer Rotationssymmetrieachse R ausgebildet. Insbesondere anhand der Figuren 2 und 5,6 erkennt man, daß der Dreiecksanker 13 im Querschnitt rechteckförmig ausgebildet ist. Diese Darstellungen machen darüber hinaus deutlich, daß der Dreiecksanker 13 symmetrisch im Vergleich zu zwei Symmetrieachsen S₁ und S₂ ausgebildet ist. Diese beiden Symmetrieachsen S₁ und S₂ schneiden sich auf der Rotationssymmetrieachse R des Ankerstrumpfes 12.

Die Figur 4 zeigt, daß der Ankerstumpf 12 dreiteilig ausgeführt ist. Er besteht im wesentlichen aus einer Drehführung 12a mit rückseitigem Betätigungskopf 14, welcher nach dem Ausführungsbeispiel als Schraubenkopf 14 mit Schlitzaufnahme 15 ausgebildet ist. Zusätzlich finden sich ein Anschlagkonus 12b sowie ein Konusfortsatz 12c für den hieran angeschlossenen Dreiecksanker 13.
Der Konusfortsatz 12c besitzt - wie der gesamte Ankerstumpf 12 - einen kreiszylindrischen Querschnitt mit einem Durchmesser d, welcher ausweislich der Figur 5 der Schmalseite Tₛ des im Querschnitt rechteckförmigen Dreiecksankers 13 entspricht. Auch die Drehführung 12a weist - wie der gesamte Ankerstumpf 12 - einen kreiszylindrischen Querschnitt auf. Der zugehörige Durchmesser D der Drehführung 12a ist größer als der Durchmesser d des Konusfortsatzes 12c ausgeführt (vergleiche Figur 4). Der vorgenannte Durchmesser D der Drehführung 12a ist darüber hinaus größer oder gleich im Vergleich zur Länge der Breitseite T_{b} des im Querschnitt rechteckförmigen Dreiecksankers 13 ausgeführt. Dies machen die Figuren 4 bis 6 unmittelbar deutlich. Die erstgenannte Darstellung läßt darüber hinaus erkennen, daß der Dreiecksanker 13 eine kreisbogenförmig abgerundete Spitze 16 aufweist.

Der Behälter 1 besitzt im Bereich seines einen Armes 6 eine an den Anschlagkonus 12b und die Drehführung 12a angepaßte kreisförmige Steckbohrung 8 für den Befestigungs- bzw. Bajonettstift 4. In behälteraußenseitiger Richtung an die Steckbohrung 8 schließt sich die bereits angesprochene Ankerbohrung 9 an, welche einen an den Dreiecksanker 13 angepaßten rechteckförmigen Querschnitt aufweist. Die Steckbohrung 8 besitzt einen gegenkonischen Bereich bzw. Gegenkonus 17, welcher als Anschlag für den Anschlagkonus 12b des Ankerstumpfes 12 wirkt. Auf diese Weise wird der Befestigungsstift 4 in axialer Richtung beim Einsetzen in die Bohrungen 7, 3, 8 und 9 festgelegt. In dieser axial gegenüber den Armen 6 fixierten Stellung des Befestigungsstiftes 4 sind nur noch Drehbewegungen möglich, welche über den Schraubenkopf 14 mit Schlitzaufnahme 15 in den Befestigungsstift 4 eingeleitet werden können.

Der Dreiecksanker 13 kann durch die Ankerbohrung 9 nur in einer bestimmten Drehstellung des Befestigungsstiftes 14 hindurchgeführt werden, weil diese Ankerbohrung 9 einen an den Dreiecksanker 13 angepaßten rechteckförmigen Querschnitt aufweist, wie beispielsweise die Figur 2 deutlich macht. Sobald der Befestigungsstift 4 mit seinem Dreiecksanker 13 durch die Ankerbohrung 9 hindurchgefädelt wurde, sind prinzipiell Drehbewegungen des Befestigungsstiftes 4 mit beliebigen Drehwinkeln möglich. Dies läßt sich darauf zurückführen, daß in dieser Stellung (vergleiche Figur 1) der Konusfortsatz 12c in der Ankerbohrung 9 aufgenommen wird, wobei dessen Drehbewegungen nicht behindert sind. Denn sein Durchmesser d entspricht im wesentlichen der Länge der Schmalseite Tₛ des rechteckförmigen Dreiecksankers 13 und damit der Länge der Schmalseite der entsprechend geformten Ankerbohrung 9 (vergleiche Figur 5).

In der in Figur 1 dargestellten Einsatzstellung des Befestigungsstiftes 4 erfolgt seine Verankerung. Zu diesem Zweck sind die Sicherungsnoppen 10 eckseitig der Ankerbohrung 9 angeordnet, wobei die Verankerungsschwenkbewegung eine 90° - Drehbewegung darstellt. Auf diese Weise wird der Dreiecksanker 13 im wesentlichen in Verankerungsstellung senkrecht zur Ankerbohrung 9 ausgerichtet, wie dies die Figur 2 unmittelbar deutlich macht. Gleichzeitig wird eine Kreuzanordnung von Dreiecksanker 13 und Ankerbohrung 9 gebildet. Dabei sind die Sicherungsnoppen 10 symmetrisch verteilt im Vergleich zu den jeweiligen Kreuzschenkeln angeordnet, und zwar jeweils ein Sicherungsnoppen 10 in einem Kreuzbereich.

## Patentansprüche

1. Befestigungsvorrichtung, insbesondere zum Festlegen eines Behälters (1) an einem Hauptzylinder (2) einer Kraftfahrzeug-Bremsanlage, mit einer Aufnahmebohrung (3) am Hauptzylinder (2) für einen hierin einsetzbaren Befestigungsstift (4), welcher den Behälter (1)am Hauptzylinder (2) verankert, **dadurch gekennzeichnet**, daß außenseitig am Behälter (1) oder am Hauptzylinder (2) zumindest ein vom Befestigungsstift (4) im Zuge seiner Verankerung überfahrbarer Sicherungsnoppen (10) zur Verhinderung einer unerwünschten Lösebewegung vorgesehen ist.

2. Befestigungsvorrichtung nach Anspruch 1, **dadurch gekennzeichnet,** daß der mindestens eine Sicherungsnoppen (10) an mindestens einem von dem Behälter (1) oder dem Hauptzylinder (2) vorstehenden Arm (6) vorgesehen ist, und daß der Arm (6) zumindest zeitweise insbesondere während einer Verankerungsschwenkbewegung federnd von dem Befestigungsstift (4) auslenkbar ist.

3. Befestigungsvorrichtung nach Anspruch 1 oder 2, **dadurch gekennzeichnet**, daß der Befestigungsstift (4) als Bajonettstift mit Ankerstumpf (12) und frontseitigem Dreiecksanker (13) ausgebildet ist, wobei der Dreiecksanker (13) den Sicherungsnoppen (10) im Zuge einer Verankerungsschwenkbewegung elastisch zurückfedernd überfährt.

4. Befestigungsvorrichtung nach einem der Ansprüche 1 bis 3, **dadurch gekennzeichnet**, daß der Dreiecksanker (13) eine kreisbogenförmig abgerundete Spitze (16) aufweist.

5. Befestigungsvorrichtung nach einem der Ansprüche 1 bis 4, **dadurch gekennzeichnet,** daß der Ankerstumpf (12) und der Dreiecksanker (13) einstückig und aus Kunststoff ausgebildet sind.

6. Befestigungsvorrichtung nach einem der Ansprüche 1 bis 5, **dadurch gekennzeichnet,** daß der Ankerstumpf (12) kreiszylindrisch im Vergleich zu einer Rotationssymmetrieachse (R ) ausgebildet ist, und daß der Dreiecksanker (13) im Querschnitt rechteckförmig ausgeführt ist.

7. Befestigungsvorrichtung nach einem der Ansprüche 1 bis 6, **dadurch gekennzeichnet**, daß der Schnittpunkt der Symmetrieachsen (S₁, S₂) des Dreiecksankers (13) und die Rotationssymmetrieachse (R) des Ankerstumpfes (12) übereinstimmen.

8. Befestigungsvorrichtung nach einem der Ansprüche 1 bis 7, **dadurch gekennzeichnet**, daß der Ankerstumpf (12) dreiteilig ausgebildet ist und eine Drehführung (12a) mit rückseitigem Betätigungskopf (14), beispielsweise Schraubenkopf (14) mit Schlitzaufnahme (15), einen Anschlagkonus (12b) und einen Konusfortsatz (12c) für den hieran angeschlossenen Dreiecksanker (13) aufweist.

9. Befestigungsvorrichtung nach einem der Ansprüche 1 bis 8, **dadurch gekennzeichnet**, daß der Konusfortsatz (12c) einen kreiszylindrischen Querschnitt mit einem Durchmesser (d) aufweist, welcher der Länge der Schmalseite (Tₛ) des im Querschnitt rechteckförmigen Dreiecksankers (13) entspricht.

10. Befestigungsvorrichtung nach einem der Ansprüche 1 bis 9, **dadurch gekennzeichnet**, daß die Drehführung (12a) einen kreiszylindrischen Querschnitt mit einem Durchmesser (D) besitzt, welcher größer oder gleich im Vergleich zur Länge der Breitseite (T_{b}) des im Querschnitt rechteckförmigen Dreiecksankers (13) ausgebildet ist.

11. Befestigungsvorrichtung nach einem der Ansprüche 1 bis 10, **dadurch gekennzeichnet,** daß der Behälter (1) außenseitig vier in gleichmäßiger Verteilung um eine Bohrungsöffnung (11) verteilte Sicherungsnoppen (10) aufweist.

12. Befestigungsvorrichtung nach einem der Ansprüche 1 bis 11, **dadurch gekennzeichnet**, daß der Behälter (1) eine an den Anschlagkonus (12b) und gegebenenfalls die Drehführung (12a) angepaßte kreisförmige Steckbohrung (8, 17) für den Befestigungsstift (4) aufweist, wobei sich in behälteraußenseitiger Richtung der Steckbohrung (8, 17) eine Ankerbohrung (9) mit an den Dreiecksanker (13) angepaßtem rechteckförmigen Querschnitt anschließt.

13. Befestigungsvorrichtung nach einem der Ansprüche 1 bis 12, **dadurch gekennzeichnet**, daß die Sicherungsnoppen (10) eckseitig der Ankerbohrung (9) bzw. der Bohrungsöffnung (11) angeordnet sind, daß ferner die Verankerungsschwenkbewegung als 90° - Drehbewegung ausgebildet ist, und daß der Dreiecksanker (13) in Verankerungstellung im wesentlichen senkrecht zur Ankerbohrung (9) unter Bildung einer Kreuzanordnung von Dreiecksanker (13) und Ankerbohrung (9) ausgerichtet ist, wobei die Sicherungsnoppen (10) im Vergleich zu den Kreuzschenkeln symmetrisch angeordnet sind.
